# EUROPÄISCHE PATENTSCHRIFT

(11) **EP 3 786 574 B1**
(45) Veröffentlichungstag und Bekanntmachung des Hinweises auf die Patenterteilung: **18.12.2024**
(21) Anmeldenummer: 19193596.4
(22) Anmeldetag: 26.08.2019
(51) Int. Cl.: G01B 11/06

(54) **SENSORVORRICHTUNG**
SENSOR DEVICE
DISPOSITIF DE DÉTECTION

(43) Veröffentlichungstag der Anmeldung: 03.03.2021
(73) Patentinhaber: Sturm Maschinen- & Anlagenbau GmbH, 94330 Salching (DE)
(72) Erfinder: ULLRICH, Wolfgang, 82319 Percha (DE)
(74) Vertreter: Wunderlich & Heim Patentanwälte PartG mbB

(56) Entgegenhaltungen:
- DE-A1- 10 104 684
- DE-A1- 102005 009 262
- JP-A- 2019 148 569
- JP-A- H05 322 796
- US-A1- 2009 061 075
- US-A1- 2009 262 353
- US-A1- 2018 172 430

## Beschreibung

Die Erfindung betrifft eine Sensorvorrichtung zur Beschichtungsuntersuchung einer Scheibe im Rahmen eines Beschichtungsvorgangs mit einem ersten optischen Sensorsystem zum Bestimmen der Schichtdicke, der auf die Scheibe aufgebrachten Beschichtung und mit einer Rotationseinrichtung zum Rotieren der Scheibe sowie ein Beschichtungsverfahren für eine Scheibe, insbesondere eine Bremsscheibe, mit einer Beschichtungsüberprüfung zum Bestimmen der Schichtdicke, der auf die Scheibe aufgebrachten Beschichtung.

Bei den aktuellen Diskussionen bezüglich der Minimierung von Abgasemissionen in Innenstädten, die zum Teil von Fahrzeugen stammen, spielt die Feinstaubbelastung eine nicht unwesentliche Rolle. Relevant sind hier insbesondere die Bestandteile PM 10 und PM 2,5, welche für die menschliche Gesundheit als Schadstoffe angesehen werden.

Neben einer Vielzahl von Ursachen wie beispielsweise Verbrennungsprozesse in Kraftwerken oder Heizungen, trägt auch der Straßenverkehr in Ballungsräumen zur Feinstaubbelastung bei. Hauptverursacher hierbei sind Verbrennungsmotoren, Abrieb von Reifen oder auch der Abrieb, der durch das Bremssystem erzeugt wird.

Eine Möglichkeit, die Emissionen, die während des Bremsvorgangs entstehen zu verringern ist, eine Hartmetallbeschichtung von Bremsscheiben vorzusehen. Im Vergleich zu einer konventionellen Bremsscheibe kann hierbei eine bis zu 90%ige Reduzierung des Abriebes und damit des Feinstaubes erreicht werden.

Zum gegenwärtigen Zeitpunkt sind zwei Verfahren verbreitet, welche hierfür verwendet werden. Das erste Verfahren wird als HVOF (high velocity oxigen fuel)-Flammenspritzen, das zweite Verfahren wird als Laser-cladding, was als Laseraufschweißen übersetzt werden kann, bezeichnet. Bei beiden Aufbringverfahren ist es wesentlich, dass möglichst gleichmäßige und fehlerfreie Schichten aufgebracht werden.

Im Folgenden wird Laser-cladding genauer betrachtet. Hierbei wird mittels eines Lasers ein Trägerbereich einer Scheibe erhitzt und durch Zuführen eines Pulvers oder eines Drahtes, welcher ebenfalls durch den Laser aufgeschmolzen wird, ein Schmelzbad erzeugt. So wird eine weitere Schicht aufgebaut, die mit dem Trägerstoff verschmolzen wird. Normalerweise findet der Schichtaufbau in mehreren Zyklen, also mehrlagig statt. Insgesamt wird eine derartige Scheibe meist spiralförmig von innen nach außen in dieser Art mit mehreren Schichten versehen.

Wesentlich für die Qualität der Beschichtung ist es, eine möglichst gleichmäßige Schichtdicke ohne Fehlstellen zu erreichen. Insofern ist es notwendig, den Beschichtungsprozess zu überprüfen und eventuell in einem zweiten Schritt Fehlstellen zu beseitigen. Dies führt zu einer Optimierung des Fertigungsprozesses, so dass möglichst gleichmäßige und optimale Schichtdicken erreicht werden. Insgesamt spart dies Werkstoff und Zeit, da anderenfalls ungleiche Schichtdicken in einem nachfolgenden Schleifprozess langwierig entfernt beziehungsweise vergleichmäßigt werden müssen.

Bei Laserbeschichtungsverfahren von Bremsscheiben wird meist eine Anlagenanordnung vorgesehen, in der die zu beschichtende Bremsscheibe mit ihren Nabenbohrungen in einer Aufnahme aufgenommen wird und rotiert wird. Die Laserbeschichtungsvorrichtung ist ortsfest bezüglich der Bremsscheibe angeordnet, kann jedoch in radialer Richtung der Bremsscheibe bewegt werden. Während des Beschichtungsvorgangs wird die Bremsscheibe mit einer entsprechenden Geschwindigkeit rotiert, so dass beispielsweise eine spiralartige Beschichtung der Scheibe mittels der Beschichtungsvorrichtung durchgeführt werden kann, welche sich radial von innen nach außen bewegt.

Aus der US 2009/061075 A1 geht ein Beschichtungsmesssystem hervor, bei dem durch eine Differenzmessung mittels eines Lasermessgeräts die Schichtdicke bestimmt wird. Ein anderes Verfahren ist aus der DE 10 104 684 A1 bekannt, bei dem mittels der Intensität der Durchstrahlung einer zu messenden Schicht deren Schichtdicke festgestellt wird.

Weitere ähnliche Verfahren sind beispielsweise aus der DE 10 2005 009 262 A1 oder der US 2018/172430 A1 bekannt.

Der Erfindung liegt die **Aufgabe** zugrunde, eine Sensorvorrichtung sowie ein Beschichtungsverfahren anzugeben, die zum effizienten Überwachen eines Beschichtungsprozesses einer Scheibe geeignet sind.

Diese Aufgabe wird erfindungsgemäß durch eine Sensorvorrichtung mit den Merkmalen des Anspruches 1 und ein Beschichtungsverfahren mit den Merkmalen des Anspruchs 15 gelöst.

Vorteilhafte Ausführungsformen der Erfindung sind in den Unteransprüchen, in der Beschreibung und in den Figuren und deren Erläuterung angegeben.

Bei dem erfindungsgemäßen Sensorsystem ist vorgesehen, dass das erste optische Sensorsystem zum zeitgleichen Ermitteln von mindestens einem ersten positionsbezogenen Messwert und einem zweiten positionsbezogenen Messwert ausgebildet ist. Hierbei können der erste und der zweite positionsbezogene Messwert den Abstand des ersten Sensorsystems zur Oberfläche der Scheibe abbilden.

Ferner ist das erste Sensorsystem eingerichtet, den ersten positionsbezogenen Messwert von einem beschichteten Bereich der Scheibe und den zweiten positionsbezogenen Messwert von einem unbeschichteten Bereich der Scheibe zu ermitteln. Das erste optische Sensorsystem weist ferner mindestens eine Linearführung auf, welche sich von einem Zentralbereich der Scheibe zu einem Randbereich erstreckt. Des Weiteren ist eine Steuer- und Auswerteeinrichtung zum Berechnen einer Schichtdicke der Scheibe an der Position des ersten positionsbezogenen Messwertes mit Hilfe des ersten und des zweiten positionsbezogenen Messwertes vorgesehen.

Ein Grundgedanke der Erfindung liegt darin, dass erkannt wurde, dass eine absolute Messung der Schichtdicke an den relativ dicken und optisch nicht transparenten Schichten äußerst schwierig ist. Außerdem spielen verschiedene Materialeigenschaften bei der Messung eine Rolle, die je nach der ausgewählten Beschichtung jeweils unterschiedlich sein können. Hierzu zählen unter anderem die Magnetisierungseigenschaften, die elektrische Leitfähigkeit oder das Ein- und Durchdringverhalten der verwendeten Materialien gegenüber bestimmten Wellenlängen, wie beispielsweise die Brechungseigenschaften von Schichtgrenzen bezogen auf die Wellenlänge oder Spektren.

Grundsätzlich könnten für das Ermitteln der Schichtdicke entsprechende Verfahren verwendet werden, welche diese Eigenschaft berücksichtigen, die jedoch den wesentlichen Nachteil haben, dass sie eine relativ geringe Messfrequenz und einen großen Messpunktdurchmesser aufweisen. Die bedeutet, dass das Verfahren relativ langsam abläuft und auch keine hochgenaue örtliche Auflösung bietet.

Daher wird entsprechend der Erfindung vorgeschlagen, eine Differenzmessung zum Bestimmen der Schichtdicke durchzuführen. Dies bedeutet, dass zum Ermitteln der Schichtdicke ein erster positionsbezogener Messwert und ein zweiter positionsbezogener Messwert ermittelt werden. Anschließend wird die Differenz der beiden positionsbezogenen Messwerte ermittelt und somit werden Rückschlüsse über die Schichtdicke gezogen. Durch eine sehr genaue örtliche Auflösung kann hierbei zusätzlich ein Oberflächenprofil erstellt werden, so dass sogar topographische Fehler detektiert werden können.

Das hier verwendete erste optische Sensorsystem weist wie beschrieben eine Linearführung auf, um das Sensorsystem von einem Innenbereich oder Zentralbereich der Scheibe zu einem Randbereich zu führen. So kann jeder beliebige Punkt auf der zu beschichtenden Scheibe erreicht werden, unter Berücksichtigung, dass die Scheibe zusätzlich rotiert wird.

Ein weiterer Vorteil des Verwendens der Differenz von zwei positionsbezogenen Messwerten ist, dass ein Taumelverhalten der Scheibe, welches unter Umständen durch ein nicht optimales Einspannen vorkommen kann, reduziert beziehungsweise bei dem Ermitteln der Schichtdicke herausgerechnet werden kann. Durch die Differenz der beiden Messwerte wird ein Taumelverhalten der beiden positionsbezogenen Messwerte, numerisch herausgerechnet.

Vorteilhaft ist es, wenn das erste optische Sensorssystem einen ersten optischen Sensor zum Ermitteln des ersten positionsbezogenen Messwertes und einen zweiten optischen Sensor zum Ermitteln des zweiten positionsbezogenen Messwertes aufweist.

Die Verwendung eines optischen Sensors bietet den Vorteil, dass eine relativ hohe Messfrequenz erreicht werden kann, so dass die Beschichtungsdicke schnell und zügig ermittelt werden kann. Dies ist insbesondere interessant, um die gesamte Produktionszeit inklusive der Beschichtungsuntersuchung zu reduzieren. Auch kann so ein Inline-Verfahren ausgeführt werden, bei dem simultan während der Beschichtung der Scheibe bereits die Schichtdicke ermittelt wird. Bei sehr langsamen, niederfrequenten Messverfahren könnte dies nur offline, das heißt nach dem Durchführen der Beschichtung erfolgen.

Grundsätzlich können die beiden optischen Sensoren an beliebigen Stellen bezüglich der Scheibe angeordnet sein. So ist es beispielsweise möglich, dass der erste und der zweite optische Sensor an gegenüberliegenden Seiten der Scheiben an gegenüberliegenden Positionen angeordnet sind. Hierdurch wird durch den ersten Sensor auf der beschichteten Seite der Abstand gegenüber einem Fixpunkt beispielsweise des ersten optischen Sensorsystems ermittelt. In analoger Weise wird auf der gegenüberliegenden Seite der Scheiben durch den zweiten optischen Sensor ebenfalls der Abstand ermittelt. Durch den Vergleich mit vorangegangenen Messungen kann so die zusätzliche Schichtdicke berechnet werden, indem der Unterschied zwischen den Abständen berücksichtigt wird. Auch bei dieser Positionierung ergibt sich wiederum der Vorteil, dass ein Taumeln der Scheibe bereits durch die Positionierung der beiden Sensoren ausgeglichen wird.

Eine andere Möglichkeit ist, den ersten und den zweiten optischen Sensor auf derselben, insbesondere auf der ersten Seite der Scheibe in radial zueinander versetzten Positionen anzuordnen. In diesem Fall wird der Abstand zwischen der Scheibe und dem ersten optischen Sensorsystem bezüglich derselben Seite der Scheibe ermittelt. Ist der erste optische Sensor auf einen beschichteten Bereich und der zweite optische Sensor auf einen nicht-beschichteten Bereich gerichtet, so kann durch den Unterschied des Abstandes der Sensoren zum Fixpunkt oder zu einer Fixebene die Schichtdicke ermittelt werden. Auch in diesem Fall würde ein Taumeln ausgeglichen werden, da sich das Taumelverhalten simultan auf beide Messwerte, sowohl des ersten als auch des zweiten optischen Sensors, auswirken würde.

In einer weiteren Ausführungsform kann ein dritter und vierter optischer Sensor vorgesehen sein, welche an einer zweiten Seite der Scheibe an radial zueinander versetzten Positionen angeordnet sind. Anders ausgedrückt befinden sich diese beiden Sensoren gegenüberliegend zum ersten und zweiten radial beabstandeten Sensor. In diesem Fall kann beispielsweise eine simultane Messung durchgeführt werden, wenn die Beschichtung auf beiden Seiten der Scheibe gleichzeitig ausgeführt wird. Ferner bietet diese Anordnung eine zusätzliche Messgenauigkeit, da zusätzlich zum Vergleich der Messwerte derselben Seite auch noch die Messwerte der gegenüberliegenden Seite hinzugezogen werden können. So wird die Messgenauigkeit weiter verbessert.

Als Sensor für den ersten, zweiten, dritten und/oder vierten optischen Sensor kann beispielsweise ein konfokaler, chromatischer Sensor verwendet werden. Dieser weist eine hohe zeitliche Auflösung auf, so dass auch eine Inlinemessung beziehungsweise Untersuchung der Beschichtung möglich ist.

Ein weiterer Vorteil dieses Sensortyps ist, dass er eine relativ hohe örtliche Auflösung hat, so dass die Schichtdicke an einer Position sehr genau berechnet beziehungsweise ermittelt werden kann.

In einer weiteren Ausführungsform kann das erste optische Sensorsystem zum zeitgleichen Ermitteln des mindestens ersten positionsbezogenen Messwertes und des zweiten positionsbezogenen Messwertes einen zur Messung in Radialrichtung der Scheibe an einer ersten Seite der Scheibe angeordneten ersten Triangulationssensor aufweisen. Beispielsweise kann ein so eingesetzter Triangulationssensor eine Messbreite von einigen Millimetern aufweisen. Er wird so angeordnet beziehungsweise geführt, dass ein Teil des Sensors den beschichteten Bereich abtastet, während ein anderer Teil einen unbeschichteten Bereich abtastet. Somit werden ebenfalls zwei positionsbezogene Messwerte ermittelt, welche analog zur Verwendung von zwei optischen Sensoren miteinander verrechnet werden können, um die Zunahme der Schichtdicke zu bestimmen.

In einer Weiterbildung dieser Ausführungsform kann das erste optische Sensorsystem an einer zweiten Seite der Scheibe einen an einer zum ersten Triangulationssensor gegenüberliegenden Position angeordneten zweiten Triangulationssensor aufweisen. In diesem Fall können zeitgleich vier Messwerte ermittelt werden, die wiederum analog zu der Verwendung mit vier separaten optischen Sensoren miteinander verrechnet werden können, um die Zunahme der Schichtdicke sowie ein Höhenprofil zu erstellen.

Weiterhin ist es vorteilhaft, wenn jeder Sensor eine Linearführung und/oder eine Zustelleinrichtung aufweist. Die Linearführung ist bevorzugt radial angeordnet, so dass mit ihrer Hilfe der Sensor von einem Innenbereich der Scheibe zu einem Außenbereich verfahren werden kann. Durch eine zusätzliche Rotation der Scheibe selbst kann somit jeder Punkt auf der Scheibe abgetastet werden. Die zusätzlich vorsehbare Zustelleinrichtung dient dazu, den Sensor in einem optimalen Abstand zu der zu messenden Seite der Scheibe einzustellen.

Sind mehrere Sensoren auf derselben Seite der Scheibe angeordnet, können diese Sensoren eine gemeinsame Linearführung und/oder eine gemeinsame Zustelleinrichtung aufweisen.

Eine derartige Ausführung bietet sich insbesondere dann an, wenn auf derselben Seite ein Sensor einen beschichteten Bereich und ein weiterer Sensor einen unbeschichteten Bereich der Scheibe abtastet. Hiermit können zum Verbessern des Messvorgangs beide Sensoren auf derselben Linearführung und derselben Zustelleinrichtung vorgesehen sein.

Im Rahmen der Erfindung kann unter einem beschichteten Bereich einer Scheibe insbesondere ein Bereich verstanden werden, der bereits mit mindestens einer Beschichtung versehen wurde. Demgegenüber kann unter dem unbeschichteten Bereich ein Bereich verstanden, der entweder noch nicht beschichtet ist, oder eine geringere Beschichtungsdicke beziehungsweise -anzahl aufweist, als der beschichtete Bereich, welcher abgetastet werden soll.

Vorteilhaft ist es, wenn zusätzlich auf einer oder beider Seiten der Scheibe ein zweites optisches Sensorsystem mit einer Zeilenkamera vorgesehen ist, welche einen Messbereich aufweist, welcher sich im Wesentlichen über den gesamten Radius einer Seite der Scheibe erstreckt. Es ist bereits möglich, mit dem ersten optischen Sensorsystem die gesamte Oberfläche einer Scheibe abzutasten. Dies dauert jedoch unter anderem aufgrund der hohen örtlichen Auflösung relativ lang. Insofern ist es entsprechend der Erfindung bevorzugt, dass die Abtastung mit dem ersten Sensorsystem lediglich punktuell beziehungsweise streifenartig ausgeführt wird und nur die Schichtdicke bestimmt wird. Um eine weitere Fehlerdetektion eventuell auch zur Vorauswahl von mit dem ersten optischen Sensorsystem abzutastenden Bereichen zu ermöglichen, kann das zweite optische Sensorsystem mit einer Zeilenkamera vorgesehen sein. Diese kann beispielsweise eine Hell-Dunkel-Feld-Beleuchtung aufweisen, die drehend im Wechsel geschaltet wird. Hierdurch ist eine sehr schnelle Aufnahme der Oberfläche möglich und welche zu einer Fehlerdetektion dienen kann.

Anhand eventuell detektierter Fehler kann dann mittels der ersten Sensorvorrichtung die Schichtdicke genauer bestimmt werden und ein Fehler verifiziert oder verworfen werden.

Bevorzugt ist ferner eine Einrichtung zum Ermitteln der Position des Zentrums der Scheibe relativ zu dem ersten und/oder zweiten optischen Sensorsystem vorgesehen. Eine derartige Einrichtung dient dazu, um einen Referenzpunkt für das erste beziehungsweise das zweite optische Sensorsystem zu definieren. Kann der Mittelpunkt der Scheibe ermittelt werden, so kann mittels der Einrichtung zum Ermitteln der Position des Zentrums die relative Position des ersten und/oder zweiten optischen Sensorsystems bestimmt werden, so dass verlässliche Daten erstellt werden können.

Um eine noch höhere Genauigkeit zu erreichen, kann ferner eine Einrichtung zum Ermitteln der Winkelposition der Scheibe vorgesehen sein. Zusammen mit der exakten Winkelposition und einem Nullpunkt kann in Verbindung mit dem ersten und/oder dem zweiten optischen Sensorsystem so eine genaue Verortung der gemessenen Werte erfolgen.

Bevorzugt ist es, wenn die Steuer- und Auswerteeinrichtung zum kontinuierlichen und/oder diskontinuierlichen Ermitteln der positionsbezogenen Messwerte ausgebildet ist. Zum endgültigen Ermitteln der positionsbezogenen Messwerte stehen verschiedene Möglichkeiten zur Verfügung. Eine Möglichkeit ist das sogenannte Inline-Verfahren, bei dem die positionsbezogenen Messwerte und damit die Schichtdicke parallel zum Beschichten der Scheibe bestimmt wird. Eine andere Möglichkeit ist, zuerst eine Seite der Scheibe oder einen Bereich zu beschichten, und anschließend die aufgetragene Schichtdicke zu ermitteln.

Hierbei ist es grundsätzlich mittels der ersten Sensorvorrichtung möglich, jegliche möglichen Punkte auf einer Scheibe beziehungsweise deren Oberflächen abzutasten. Dies dauert jedoch je nach verwendetem Sensorsystem relativ lange. Daher kann beispielsweise die Scheibe spiralartig mit Freiräumen zwischen den Abtaststreifen abgetastet werden. Jedoch sind auch andere Kurvenformen für die Abtastung möglich. Auch ob insgesamt eine kontinuierliche Abtastung mittels der positionsbezogenen Messwerte durchgeführt wird oder punktuell bestimmte Bereiche abgetastet werden, kann abhängig vom exakten Anwendungsbereich bestimmt werden.

Die erfindungsgemäße Sensorvorrichtung kann besonders gut für eine Beschichtungseinrichtung für eine Bremsscheibe verwendet werden. Hierbei ist es wie bereits vorher erläutert vorteilhaft, wenn eine hochfeste Beschichtung aufgebracht wird, so dass die Feinstaubmenge, welche durch Abrieb entsteht, verringert wird. Um sicherzugehen, dass die Beschichtung gleichmäßig und ausreichend dick ist, kann die erfindungsgemäße Sensorvorrichtung eingesetzt werden.

Bei dem erfindungsgemäßen Beschichtungsverfahren für eine Scheibe, insbesondere eine Bremsscheibe, mit einer Beschichtungsüberprüfung zum Bestimmen der Schichtdicke, der auf die Scheibe aufgebrachten Beschichtung, wird mit einem ersten optischen Sensorsystem zeitgleich mindestens ein erster positionsbezogener Messwert und ein zweiter positionsbezogener Messwert ermittelt. Der erste und der zweite positionsbezogene Messwert bilden hierbei den Abstand des ersten optischen Sensorsystems zur Oberfläche der Scheibe ab, wobei der erste positionsbezogene Messwert von einem beschichteten Bereich der Scheibe und der zweite positionsbezogene Messwert von einem unbeschichteten Bereich der Scheibe ermittelt wird. Die Schichtdicke der Scheibe an der Position des ersten positionsbezogenen Messwertes wird mit Hilfe des ersten und des zweiten positionsbezogenem Messwertes berechnet. Um jeden beliebigen Punkt auf der Scheibe untersuchen zu können kann die Scheibe während der Beschichtungsüberprüfung mittels einer Rotationseinrichtung rotiert werden und das erste optische Sensorsystem mittels mindestens einer Linearführung, welche sich von einem Zentralbereich der Scheibe zu einem Randbericht erstreckt, verfahren werden.

Die Erfindung wird nachfolgend anhand schematischer Ausführungsbeispiele unter Bezugnahme auf die Figuren näher erläutert. Hierbei zeigen:
- Fig. 1: eine schematische Darstellung einer ersten Ausführung einer erfindungsgemäßen Sensorvorrichtung;
- Fig. 2: eine schematische Darstellung einer zweiten Ausführung einer erfindungsgemäßen Sensorvorrichtung; und
- Fig. 3: eine schematische Darstellung einer dritten Ausführung einer erfindungsgemäßen Sensorverrichtung.

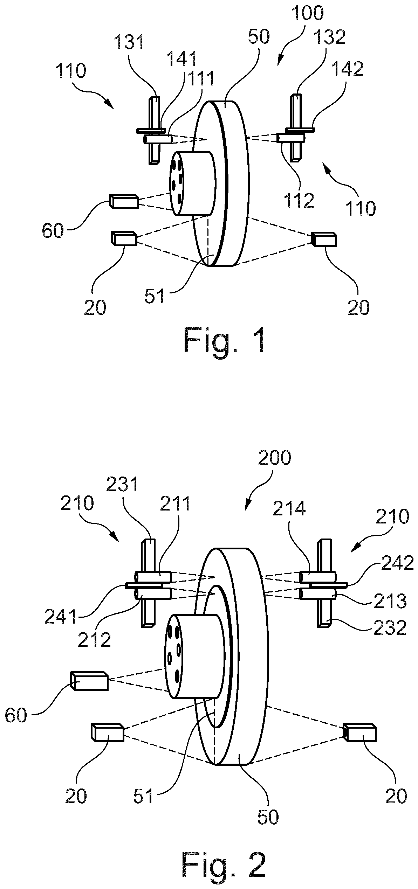

In Fig. 1 ist eine erste Ausführungsform einer erfindungsgemäßen Sensorverrichtung 100 dargestellt. Die erfindungsgemäße Sensorvorrichtung weist ein zweiteilig ausgeführtes erstes optisches Sensorsystem 110 auf. Je ein Teil dieses Sensorsystems 110 ist auf einer gegenüberliegenden Seite einer Scheibe 50, bei der es sich insbesondere um eine Bremsscheibe handeln kann, angeordnet. Wie bereits beschrieben, ist es Ziel der erfindungsgemäßen Sensorvorrichtung 100, die Schichtdicke bei einer Beschichtung der Scheibe 50 zu bestimmen.

Jede Teileinheit des ersten optischen Sensorsystems 110 weist einen optischen Sensor 111, 112 auf. Jeder dieser Sensoren 111, 112 ist an einer Linearausführung 131, 132 befestigt und weist zusätzlich eine Zustellung 141, 142 auf.

Als optischer Sensor 111, 112 kann hierbei beispielsweise ein konfokaler, chromatischer Sensor verwendet werden, welcher den Abstand zur entsprechenden Seite der Scheibe 50 bestimmt.

Ferner ist ein zweites optisches Sensorsystem 20 vorgesehen, welches beispielsweise in Form einer Zeilenkamera ausgestaltet sein kann. Diese Zeilenkamera ist so gewählt, dass sie den Bereich vom Mittelpunkt bis zum äußeren radialen Ende der Scheibe 50 überwachen kann.

Ferner ist zusätzlich im Mittelbereich, das heißt. im Zentrumsbereich der Scheibe 50, eine weitere Zeilenkamera 60 vorgesehen. Diese dient dazu, den exakten Mittelpunkt der Scheibe 50 zu bestimmen, so dass die mittels des ersten optischen Sensorsystems 110 und des zweiten optischen Sensorsystems 20 ermittelten Messwerte relativ zu einem Fixpunkt angegeben werden können. Bei diesem Fixpunkt handelt es sich beispielsweise um den Befestigungspunkt der Scheibe 50.

Hier nicht dargestellt, ist eine Rotationseinrichtung, welche es ermöglicht die Scheibe 50 zu drehen, so dass während der Messvorgänge die beiden Sensorsysteme 110 und 20 fest stehend verbleiben können beziehungsweise nur in radialer Richtung bewegt werden.

Im Folgenden wird detaillierter auf die Funktionalität der beiden Sensorsysteme 110, 20 eingegangen.

Das erste optische Sensorsystem 110 besitzt wie bereits beschrieben zwei optische Sensoren 111 und 112, welche auf gegenüberliegenden Seiten der Scheibe 50 an im Wesentlichen gegenüberliegenden Positionen angeordnet sind. Mittels der beiden Zustellungen 141, 142 werden die beiden optischen Sensoren 111, 112 in einem optimalen Abstand zur Oberfläche der Scheibe 50 gebracht, so dass eine gute und sichere sowie effiziente Messung durchgeführt werden kann. Anschließend wird mittels der beiden Sensoren 111, 112 der jeweilige Abstand zur Scheibe 50 bestimmt.

In der Ausführungsform nach Fig. 1 wird diese Messung wiederholt, wenn eine Beschichtung 51 auf die Scheibe 50 auf einer Seite aufgebracht ist. Über den ermittelten Abstand der beiden optischen Sensoren 111, 112 zu den unterschiedlichen Zeitpunkten einmal mit Beschichtung einmal ohne Beschichtung, ist es möglich die Dicke der Beschichtung zu bestimmen.

Mittels des ersten optischen Sensorsystems 110 ist es möglich, eine Schichtdicke bei der Beschichtung der Scheibe 50 zu bestimmen. Aufgrund der eingesetzten Sensoren ist es jedoch nicht wirtschaftlich, jeden Punkt auf der Scheibe 50 abzuteilen, um insgesamt eine hochgenaue Auflösung der Schichtdickenverteilung zu erzeugen. Bevorzugt wird die Scheibe 50 spiralförmig oder mäanderförmig abgetastet. Aber auch eine streifenförmige oder kreisförmige Abtastung ist möglich, bei der mehrere Kreise mit jeweils unterschiedlichem Abstand zum Zentrum abgetastet werden.

Zum Durchführen einer Messung wird die Scheibe 50 über die Rotationseinrichtung rotiert sowie die beiden Sensoren 111, 112 mittels der Linearführungen 131, 132 verschoben.

Um eine weitere Verbesserung der Messgenauigkeit beziehungsweise Ermittlung von eventuellen Beschichtungsfehlern über die gesamte Oberfläche der Scheibe 50 zu ermöglichen, ist das zweite optische Sensorsystem 20 vorgesehen. Dieses besteht wie bereits beschrieben aus einer Zeilenkamera, die derart angeordnet ist, dass sie vom Zentrum bis zum äußeren Rand der Scheibe 50 Aufnahmen tätigen beziehungsweise Messwerte ermitteln kann. Während der Rotation der Scheibe werden beispielsweise über eine Hell-Dunkel-Fehlererkennung kontinuierlich Werte über das zweite optische Sensorsystem 20 ermittelt. Diese können anschließend für eine Fehlerermittlung sowie Qualitätskontrolle herangezogen werden, um zu bestimmen, ob an bestimmten Stellen die Beschichtung nicht erfolgreich oder fehlerhaft ist.

In Fig. 2 ist eine weitere Ausführungsform einer erfindungsgemäßen Sensorvorrichtung 200 dargestellt.

Hierbei sind identische Bauteile aus Fig. 1 mit denselben Bezugszeichen bezeichnet bzw. nicht erneut beschrieben.

Die gezeigte erfindungsgemäße Sensorvorrichtung 200 unterscheidet sich zur Vorrichtung 100 aus Fig. 1 durch ein etwas anders ausgeführtes erstes optisches Sensorsystem 210.

Dieses besteht in der hier dargestellten Ausführungsform aus insgesamt vier optischen Sensoren 211, 212, 213, 214. Hierbei sind jeweils zwei optische Sensoren 211, 212 und 213, 214 auf derselben Seite der Scheibe 50 angerichtet. Die beiden auf derselben Seite der Scheibe 50 angeordneten Sensoren 211, 212 und 213, 214 teilen sich eine gemeinsame Linearführung 231, 232 sowie eine gemeinsame Zustellung 241, 242.

Mit der gezeigten Ausführungsform ist eine sogenannte Inlinemessung möglich. Dies bedeutet, dass bereits während des Beschichtungsvorgangs der Scheibe 50 ein Ermitteln der aufgebrachten Schichtdicke erfolgen kann. Hierfür sind die beiden optischen Sensoren 211, 212 und 213, 214, welche sich auf derselben Seite der Scheibe 50 befinden derart angeordnet, dass ein optischer Sensor 211, 213 einen beschichteten Bereich abtastet und der benachbart von ihm angeordnete optische Sensor 212, 214 einen unbeschichteten Bereich abtastet. Hierdurch kann durch die Differenz der beiden Messungen die Schichtdicke ermittelt werden.

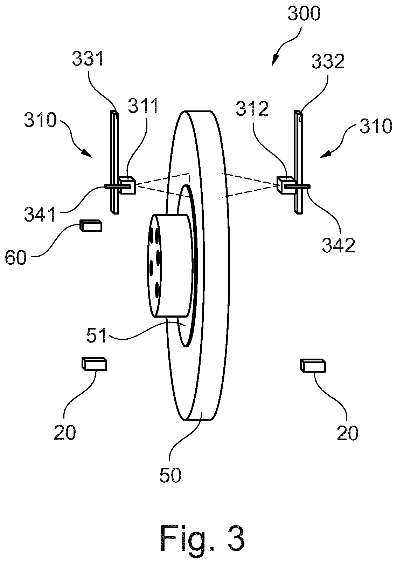

Abschließend wird unter Bezugnahme auf Fig. 3 eine dritte Ausführungsform der erfindungsgemäßen Sensorvorrichtung 300 beschrieben. Auch hierbei unterscheidet sich die Sensorvorrichtung 300 lediglich durch die exakte Ausführung des ersten optischen Sensorsystems 300 zu den zuvor beschriebenen Ausführungen.

Das erste optische Sensorsystem 300 weist in diesen Fall zwei auf den gegenüberliegenden Seiten der Scheibe 50 angeordneten optischen Sensoren 311, 312 auf. Bei den optischen Sensoren 311, 312 handelt es sich um Triangulationssensoren. Diese sind jeweils wiederum auf einer Linearführung 331, 332 mit einer entsprechenden Zustellung 341, 342 angeordnet. Die Triangulationssensoren 311, 312werden derart aufgebaut, dass sie einen Bereich der Scheibe 50 überwachen können auf dem zum einen eine Beschichtung 51 zum anderen keine Beschichtung vorgesehen ist. Hierdurch ist es möglich, durch die über die Sensoren 311, 312 ermittelten Messwerte die Schichtdicke zu ermitteln.

Ein weiterer Vorteil der erfindungsgemäßen Sensorvorrichtung 100, 200, 300, welcher sich dadurch ergibt, dass auf beiden Seiten der Scheibe 50 jeweils Sensoren 111, 112, 211, 212, 213, 214, 311, 312 angeordnet sind und die von ihnen ermittelten Messwerte insgesamt zum Bestimmen der Schichtdicke herangezogen werden, ist, dass ein Taumeln welches durch ein nicht optimales Einspannen der Scheibe 50 auftreten kann, über die ermittelten Messwerte herausgerechnet werden kann.

Mit der erfindungsgemäßen Sensorvorrichtung ist es soweit möglich, schnell und effizient hochgenaue Werte zum Ermitteln der Schichtdicke zu erhalten.

## Patentansprüche

1. Sensorvorrichtung (100, 200, 300) zur Beschichtungsuntersuchung einer Scheibe (50) im Rahmen eines Beschichtungsvorgangs,
mit einem ersten optischen Sensorsystem (110, 210, 310) zum Bestimmen der Schichtdicke, der auf die Scheibe (50) aufgebrachten Beschichtung (51), mit einer Rotationseinrichtung zum Rotieren der Scheibe und mit einer Steuerund Auswerteeinrichtung,
wobei das erste optische Sensorsystem (110, 210, 310) zum Ermitteln von mindestes einem ersten positionsbezogenen Messwert und einem zweiten positionsbezogenen Messwert ausgebildet ist,
wobei der erste und der zweite positionsbezogene Messwert den Abstand des ersten Sensorsystems (110, 210, 310) zur Oberfläche der Scheibe abbilden,
wobei das erste Sensorsystem (110, 210, 310) eingerichtet ist, den ersten positionsbezogenen Messwert von einem beschichteten Bereich der Scheibe (50) und den zweiten positionsbezogenen Messwert von einem unbeschichteten Bereich der Scheibe (50) zu ermitteln,
wobei die Steuer- und Auswerteeinrichtung zum Berechnen einer Schichtdicke der Scheibe (50) an der Position des ersten positionsbezogenen Messwertes mit Hilfe des ersten und des zweiten positionsbezogenen Messwertes eingerichtet ist,
**dadurch gekennzeichnet,**
**dass** das erste optische Sensorsystem (110, 210, 310) zum zeitgleichen Ermitteln von mindestes dem ersten positionsbezogenen Messwert und dem zweiten positionsbezogenen Messwert ausgebildet ist, und
**dass** das erste optische Sensorsystem (110, 210, 310) mindestens eine Linearführung (131, 132, 231, 232, 331, 332) aufweist, welche sich von einem Zentralbereich der Scheibe (50) zu einem Randbereich erstreckt.

2. Sensorvorrichtung (100, 200) nach Anspruch 1,
**dadurch gekennzeichnet,**
**dass** das erste optische Sensorssystem (110, 210) einen ersten optischen Sensor (111, 211) zum Ermitteln des ersten positionsbezogenen Messwertes und einen zweiten optischen Sensor (112, 212) zum Ermitteln des zweiten positionsbezogenen Messwertes aufweist.

3. Sensorvorrichtung (100, 200) nach Anspruch 2,
**dadurch gekennzeichnet,**
**dass** der erste und der zweite optische Sensor (111, 112) an gegenüberliegenden Seiten der Scheibe (50) an gegenüberliegenden Positionen angeordnet sind.

4. Sensorvorrichtung (200) nach Anspruch 2,
**dadurch gekennzeichnet,**
**dass** der erste und der zweite optische Sensor (211, 212) an einer ersten Seite der Scheibe (50) in radial zueinander versetzter Position angeordnet sind.

5. Sensorvorrichtung (200) nach Anspruch 4,
**dadurch gekennzeichnet,**
**dass** ein dritter (213) und ein vierter (214) optischer Sensor vorgesehen sind, welche an einer zweiten Seite der Scheibe an radial zueinander versetzten Positionen angeordnet sind.

6. Sensorvorrichtung (100, 200) nach einem der Ansprüche 2 bis 5,
**dadurch gekennzeichnet,**
**dass** zumindest der erste und der zweite optische Sensor (111, 112, 211, 212) als konfokaler-chromatischer Sensor ausgeführt sind.

7. Sensorvorrichtung (300) nach Anspruch 1,
**dadurch gekennzeichnet,**
**dass** das erste optische Sensorsystem (310) zum zeitgleichen Ermitteln des mindestens ersten positionsbezogenen Messwertes und des zweiten positionsbezogenen Messwertes einen zur Messung in Radialrichtung der Scheibe (50) an einer ersten Seite der Scheibe angeordneten ersten Triangulationssensor (311) aufweist.

8. Sensorvorrichtung (300) nach Anspruch 7,
**dadurch gekennzeichnet,**
**dass** das erste optische Sensorsystem (300) einen an einer zweiten Seite der Scheibe (50) an einer zum ersten Triangulationssensor (311) gegenüberliegenden Position angeordneten zweiten Triangulationssensor (312) aufweist.

9. Sensorvorrichtung (100, 200, 300) nach einem der Ansprüche 2 bis 8,
**dadurch gekennzeichnet,**
**dass** jeder Sensor (111, 112, 211, 212, 213, 214, 311, 312) eine Linearführung (131, 132, 231, 232, 331, 332) und/oder eine Zustelleinrichtung (141, 142, 241, 242, 341, 342) aufweist.

10. Sensorvorrichtung (100, 200, 300) nach einem der Ansprüche 2 bis 6, 8 oder 9,
**dadurch gekennzeichnet,**
**dass** auf derselben Seite der Scheibe (50) angeordnete Sensoren (111, 112, 211, 212, 213, 214, 311, 312) eine gemeinsame Linearführung (131, 132, 231, 232, 331, 332) und/oder Zustelleinrichtung (141, 142, 241, 242, 341, 342) aufweisen.

11. Sensorvorrichtung (100, 200, 300) nach einem der Ansprüche 1 bis 10,
**dadurch gekennzeichnet,**
**dass** auf einer oder auf beiden Seiten der Scheibe (50) ein zweites optisches Sensorsystem (20) mit einer Zeilenkamera vorgesehen ist, welche einen Messbereich aufweist, welcher sich im Wesentlichen über den gesamten Radius einer Seite der Scheibe (50) erstreckt.

12. Sensorvorrichtung (100, 200, 300) nach einem der Ansprüche 1 bis 11,
**dadurch gekennzeichnet,**
**dass** eine Einrichtung zum Ermitteln der Position des Zentrums der Scheibe (50) relativ zu dem ersten optischen Sensorsystem (110, 210, 310) vorgesehen ist.

13. Sensorvorrichtung (100, 200, 300) nach einem der Ansprüche 1 bis 12,
**dadurch gekennzeichnet,**
**dass** eine Einrichtung zum Ermitteln der Winkelposition der Scheibe (50) vorgesehen ist.

14. Beschichtungsvorrichtung für eine Bremsscheibe
**gekennzeichnet durch**
eine Sensorvorrichtung (100, 200, 300) nach einem der Ansprüche 1 bis 13.

15. Beschichtungsverfahren für eine Scheibe, insbesondere eine Bremsscheibe, mit einer Beschichtungsüberprüfung zum Bestimmen der Schichtdicke, der auf die Scheibe (50) aufgebrachten Beschichtung (51),
wobei mit einem ersten optischen Sensorsystem (110, 210, 310) mindestes ein erster positionsbezogener Messwert und ein zweiter positionsbezogener Messwert ermittelt wird,
wobei der erste und der zweite positionsbezogene Messwert den Abstand des ersten optischen Sensorsystems (110, 210, 310) zur Oberfläche der Scheibe (50) abbilden,
wobei der erste positionsbezogene Messwert von einem beschichteten Bereich der Scheibe (50) und der zweite positionsbezogene Messwert von einem unbeschichteten Bereich der Scheibe (50) ermittelt wird,
wobei eine Schichtdicke der Scheibe (50) an der Position des ersten positionsbezogenen Messwertes mit Hilfe des ersten und des zweiten positionsbezogenen Messwertes berechnet wird,
wobei die Scheibe während der Beschichtungsüberprüfung mittels einer Rotationseinrichtung rotierbar ist,
**dadurch gekennzeichnet**
**dass** mit einem ersten optischen Sensorsystem (110, 210, 310) mindestes der erste positionsbezogener Messwert und der zweiter positionsbezogener Messwert zeitgleich mit dem ersten optischen Sensorsystem (110, 210, 310) ermittelt wird, und
**dass** das erste optische Sensorsystem (110, 210, 310) mittels mindestens einer Linearführung (131, 132, 231, 232, 331, 332), welche sich von einem Zentralbereich der Scheibe (50) zu einem Randbericht erstreckt, verfahrbar ist.

## Claims

1. Sensor device (100, 200, 300) for examining the coating of a disc (50) as part of a coating process,
comprising a first optical sensor system (110, 210, 310) for determining the layer thickness of the coating (51) applied to the disc (50),
comprising a rotation apparatus for rotating the disc, and
comprising a control and analysis apparatus,
wherein the first optical sensor system (110, 210, 310) is designed to identify at least one first position-based measured value and one second position-based measured value,
wherein the first and the second position-based measured value describe the distance between the first sensor system (110, 210, 310) and the surface of the disc,
wherein the first sensor system (110, 210, 310) is configured to identify the first position-based measured value of a coated region of the disc (50) and the second position-based measured value of an uncoated region of the disc (50),
wherein a control and analysis apparatus is configured for calculating a layer thickness of the disc (50) at the position of the first position-based measured value with the aid of the first and the second position-based measured value, **characterized in that**
the first optical sensor system (110, 210, 310) is designed to simultaneously identify at least the first position-based measured value and the second position-based measured value, and
**in that** the first optical sensor system (110, 210, 310) comprises at least one linear guide (131, 132, 231, 232, 331, 332), which extends from a central region of the disc (50) to an edge region.

2. Sensor device (100, 200) according to claim 1,
**characterized in that**
the first optical sensor system (110, 210) comprises a first optical sensor (111, 211) for identifying the first position-based measured value and a second optical sensor (112, 212) for identifying the second position-based measured value.

3. Sensor device (100, 200) according to claim 2,
**characterized in that**
the first and the second optical sensor (111, 112) are arranged in opposite positions on opposite sides of the disc (50).

4. Sensor device (200) according to claim 2,
**characterized in that**
the first and the second optical sensor (211, 212) are arranged in a position so as to be radially offset from one another on a first side of the disc (50).

5. Sensor device (200) according to claim 4,
**characterized in that**
a third (213) and a fourth (214) optical sensor are provided, which are arranged in positions so as to be radially offset from one another on a second side of the disc.

6. Sensor device (100, 200) according to claim 1,
**characterized in that**
at least the first and the second optical sensor (111, 112, 211, 212) are designed as confocal chromatic sensors.

7. Sensor device (300) according to claim 1,
**characterized in that**
the first optical sensor system (310) for simultaneously identifying the at least one first position-based measured value and the second position-based measured value comprises a first triangulation sensor (311) arranged on a first side of the disc for the measurement in the radial direction of the disc (50).

8. Sensor device (300) according to claim 7,
**characterized in that**
the first optical sensor system (300) comprises a second triangulation sensor (312) arranged in a position opposite the first triangulation sensor (311) on a second side of the disc (50).

9. Sensor device (100, 200, 300) according to any one of claims 2 to 8,
**characterized in that**
each sensor (111, 112, 211, 212, 213, 214, 311, 312) comprises a linear guide (131, 132, 231, 232, 331, 332) and/or an adjustment apparatus (141, 142, 241, 242, 341, 342).

10. Sensor device (100, 200, 300) according to any one of claims 2 to 6, 8 or 9,
**characterized in that**
sensors (111, 112, 211, 212, 213, 214, 311, 312) arranged on the same side of the disc (50) comprise a common linear guide (131, 132, 231, 232, 331, 332) and/or adjustment apparatus (141, 142, 241, 242, 341, 342).

11. Sensor device (100, 200, 300) according to any one of claims 1 to 10,
**characterized in that**
a second optical sensor system (20) comprising a line scan camera is provided on one or both sides of the disc (50) and comprises a measuring region that extends substantially over the entire radius of one side of the disc (50).

12. Sensor device (100, 200, 300) according to any one of claims 1 to 11,
**characterized in that**
an apparatus is provided for identifying the position of the center of the disc (50) relative to the first optical sensor system (110, 210, 310).

13. Sensor device (100, 200, 300) according to any one of claims 1 to 12,
**characterized in that**
an apparatus is provided for identifying the angular position of the disc (50).

14. Coating device for a brake disc,
**characterized by**
a sensor device (100, 200, 300) according to any one of claims 1 to 13.

15. Coating method for a disc, in particular a brake disc,
comprising inspecting the coating for determining the layer thickness of the coating (51) applied to the disc (50),
wherein at least one first position-based measured value and one second position-based measured value are identified by a first optical sensor system (110, 210, 310),
wherein the first and the second position-based measured value describe the distance between the first optical sensor system (110, 210, 310) and the surface of the disc (50),
wherein the first position-based measured value of a coated region of the disc (50) and the second position-based measured value of an uncoated region of the disc (50) are identified,
wherein a layer thickness of the disc (50) at the position of the first position-based measured value is calculated with the aid of the first and the second position-based measured value,
wherein the disc can be rotated by means of a rotation apparatus while the coating is being inspected,
**characterized in that**
at least the first position-based measured value is identified by a first optical sensor system (110, 210, 310) and the second position-based measured value is simultaneously identified by the first optical sensor system (110, 210, 310), and **in that** the first optical sensor system (110, 210, 310) can be moved by means of at least one linear guide (131, 132, 231, 232, 331, 332), which extends from a central region of the disc (50) to an edge region.

## Revendications

1. Dispositif de détection (100, 200, 300) pour l'examen du revêtement d'un disque (50) dans le cadre d'une opération de revêtement,
comprenant un premier système de capteurs optiques (110, 210, 310) pour déterminer l'épaisseur de couche du revêtement (51) appliqué sur le disque (50),
comprenant un dispositif de rotation pour mettre en rotation le disque et comprenant un dispositif de commande et d'évaluation,
dans lequel
le premier système de capteurs optiques (110, 210, 310) est conçu pour déterminer au moins une première valeur de mesure relative à la position et une deuxième valeur de mesure relative à la position,
les première et deuxième valeurs de mesure relatives à la position représentent la distance du premier système de capteurs (110, 210, 310) par rapport à la surface du disque,
le premier système de capteurs (110, 210, 310) est conçu pour déterminer la première valeur de mesure relative à la position à partir d'une zone revêtue du disque (50) et la deuxième valeur de mesure relative à la position à partir d'une zone non revêtue du disque (50),
le dispositif de commande et d'évaluation est conçu pour calculer une épaisseur de couche du disque (50) à la position de la première valeur de mesure relative à la position à l'aide des première et deuxième valeurs de mesure relatives à la position,
**caractérisé en ce que**
le premier système de capteurs optiques (110, 210, 310) est conçu pour déterminer simultanément au moins la première valeur de mesure relative à la position et la deuxième valeur de mesure relative à la position,
**en ce que** le premier système de capteurs optiques (110, 210, 310) présente au moins un guidage linéaire (131, 132, 231, 232, 331, 332) qui s'étend d'une zone centrale du disque (50) vers une zone de bordure.

2. Dispositif de détection (100, 200) selon la revendication 1,
**caractérisé en ce que**
le premier système de capteurs optiques (110, 210) comprend un premier capteur optique (111, 211) pour déterminer la première valeur de mesure relative à la position et un deuxième capteur optique (112, 212) pour déterminer la deuxième valeur de mesure relative à la position.

3. Dispositif de détection (100, 200) selon la revendication 2,
**caractérisé en ce que**
les premier et deuxième capteurs optiques (111, 112) sont disposés sur des faces opposées du disque (50) à des positions opposées.

4. Dispositif de détection (200) selon la revendication 2,
**caractérisé en ce que**
les premier et deuxième capteurs optiques (211, 212) sont disposés sur une première face du disque (50) dans des positions radialement décalées l'une par rapport à l'autre.

5. Dispositif de détection (200) selon la revendication 4,
**caractérisé en ce que**
il est prévu un troisième (213) et un quatrième (214) capteur optique qui sont disposés sur une deuxième face du disque à des positions radialement décalées l'une par rapport à l'autre.

6. Dispositif de détection (100, 200) selon l'une des revendications 2 à 5,
**caractérisé en ce que**
au moins les premier et deuxième capteurs optiques (111, 112, 211, 212) sont réalisés sous forme de capteur confocal chromatique.

7. Dispositif de détection (300) selon la revendication 1,
**caractérisé en ce que**
le premier système de capteurs optiques (310), conçu pour déterminer simultanément ladite au moins première valeur de mesure relative à la position et la deuxième valeur de mesure relative à la position, présente un premier capteur de triangulation (311) disposé sur une première face du disque pour la mesure dans la direction radiale du disque (50).

8. Dispositif de détection (300) selon la revendication 7,
**caractérisé en ce que**
le premier système de capteurs optiques (300) comprend un deuxième capteur de triangulation (312) disposé sur une deuxième face du disque (50) à une position opposée au premier capteur de triangulation (311).

9. Dispositif de détection (100, 200, 300) selon l'une des revendications 2 à 8,
**caractérisé en ce que**
chaque capteur (111, 112, 211, 212, 213, 214, 311, 312) présente un guidage linéaire (131, 132, 231, 232, 331, 332) et/ou un dispositif d'approche (141, 142, 241, 242, 341, 342).

10. Dispositif de détection (100, 200, 300) selon l'une des revendications 2 à 6, 8 ou 9,
**caractérisé en ce que**
les capteurs (111, 112, 211, 212, 213, 214, 311, 312) disposés sur la même face du disque (50) présentent un guidage linéaire commun (131, 132, 231, 232, 331, 332) et/ou un dispositif d'approche commun (141, 142, 241, 242, 341, 342).

11. Dispositif de détection (100, 200, 300) selon l'une des revendications 1 à 10,
**caractérisé en ce que**
il est prévu, sur une ou sur les deux faces du disque (50), un deuxième système de capteurs optiques (20) comportant une caméra linéaire qui présente une plage de mesure qui s'étend sensiblement sur tout le rayon d'une face du disque (50).

12. Dispositif de détection (100, 200, 300) selon l'une des revendications 1 à 11,
**caractérisé en ce que**
il est prévu un dispositif de détermination de la position du centre du disque (50) par rapport au premier système de capteurs optiques (110, 210, 310).

13. Dispositif de détection (100, 200, 300) selon l'une des revendications 1 à 12,
**caractérisé en ce que**
il est prévu un dispositif de détermination de la position angulaire du disque (50).

14. Dispositif de revêtement d'un disque de frein,
**caractérisé par**
un dispositif de détection (100, 200, 300) selon l'une des revendications 1 à 13.

15. Procédé de revêtement d'un disque, en particulier d'un disque de frein, avec une inspection du revêtement pour déterminer l'épaisseur de couche du revêtement (51) appliqué sur le disque (50),
dans lequel
au moins une première valeur de mesure relative à la position et une deuxième valeur de mesure relative à la position sont déterminées à l'aide d'un premier système de capteurs optiques (110, 210, 310),
les première et deuxième valeurs de mesure relatives à la position représentent la distance du premier système de capteurs optiques (110, 210, 310) par rapport à la surface du disque (50),
la première valeur de mesure relative à la position est déterminée à partir d'une zone revêtue du disque (50) et la deuxième valeur de mesure relative à la position est déterminée à partir d'une zone non revêtue du disque (50),
une épaisseur de couche du disque (50) à la position de la première valeur de mesure relative à la position est calculée à l'aide des première et deuxième valeurs de mesure relatives à la position,
le disque peut être mis en rotation par un dispositif de rotation pendant l'inspection du revêtement,
**caractérisé en ce que**
au moins la première valeur de mesure relative à la position et la deuxième valeur de mesure relative à la position sont déterminées simultanément à l'aide du premier système de capteurs optiques (110, 210, 310), et
**en ce que** le premier système de capteurs optiques (110, 210, 310) peut être déplacé au moyen d'au moins un guidage linéaire (131, 132, 231, 232, 331, 332) qui s'étend d'une zone centrale du disque (50) vers une zone de bordure.
